Europäisches Patentamt

European Patent Office

Office européen des brevets

(19)

(11) Publication number: **0 110 673**
**B1**

(12) **EUROPEAN PATENT SPECIFICATION**

(45) Date of publication of patent specification: **24.08.88**

(21) Application number: **83307160.8**

(22) Date of filing: **23.11.83**

(51) Int. Cl.⁴: **H 02 G 15/113,**
**H 02 G 15/117**

(54) **Electrical cable connections for gas-pressurized telecommunication cables.**

(30) Priority: **26.11.82 DE 3243828**

(43) Date of publication of application:
**13.06.84 Bulletin 84/24**

(45) Publication of the grant of the patent:
**24.08.88 Bulletin 88/34**

(84) Designated Contracting States:
**BE FR IT NL**

(56) References cited:
**FR-A-1 602 657**
**FR-A-2 301 119**
**GB-A- 913 727**
**JP-U-56 063 231**
**US-A-2 771 502**
**US-A-3 663 740**
**US-A-3 692 926**
**US-A-3 836 694**

(73) Proprietor: **MINNESOTA MINING AND**
**MANUFACTURING COMPANY**
**3M Center, P.O. Box 33427**
**St. Paul, Minnesota 55133-3427 (US)**

(72) Inventor: **Heucke, Karl-Heinrich c/o 3M**
**Electrical**
**Laboratories GmbH Georg-Wilhelm-Strasse 183**
**D-2102 Hamburg 93 (DE)**
Inventor: **Pearson, Ronald c/o 3M Electrical**
**Laboratories GmbH Georg-Wilhelm-Strasse 183**
**D-2102 Hamburg 93 (DE)**
Inventor: **Rosenthal, Bernd c/o 3M Electrical**
**Laboratories GmbH Georg-Wilhelm-Strasse 183**
**D-2102 Hamburg 93 (DE)**
Inventor: **Ott, Albrecht c/o 3M Electrical**
**Laboratories GmbH Georg-Wilhelm-Strasse 183**
**D-2102 Hamburg 93 (DE)**

(74) Representative: **Baillie, Iain Cameron et al**
**c/o Ladas & Parry Isartorplatz 5**
**D-8000 München 2 (DE)**

Courier Press, Leamington Spa, England.

## Description

Technical field

The invention pertains to an electrical cable connection for gas-pressurizable multi-wire telecommunication cables, with gas impermeable sheaths. The cable connection includes an essentially tubular electrically insulating sleeve, preferably of plastic, which sleeve, while surrounding the cable connections, extends from cable sheath to cable sheath and is sealed at the end portions to the cable sheaths by cast bodies in a gas-tight manner. The sleeve is composed of shells which can be clamped together by locking means, and which have longitudinal flanges at which the shells are sealed in a gas-tight manner with respect to each other. In the end sections of the sleeves casting forms are partitioned off by annular side walls positioned on the cable sheaths.

Background art

In the cable connections of German DE—A—26 04 477 or of FR—A—2 301 119, the superimposed longitudinal flanges form a moulding cavity which is filled with a hardenable casting mass. The flanges form a gas tight connection with one another and with the cast bodies. Since modern telecommunication cables have a very large number of wires, and cable connections prepared herewith, thus must necessarily be large and long in order to be capable of including all wire connections, a considerable amount of casting material is necessary to cast the mould cavity provided between the flanges. This increases the weight and cost of the cable connections. The shells must be provided with interengaging wall portions to limit the mould cavity and must be of sufficient size in order to enclose the mould cavity between them. The manufacturing of such shells is thus expensive and the assembly of the cable connection requires great care so that the mould cavity is properly closed outwardly and inwardly over the total length of the flange.

With the usual dimensions of multi-wire telecommunication cable connections, shells of acceptable weight cannot be designed to have sufficient shape-retaining rigidity, so that they can be clamped together with clips as disclosed in the above reference to form a reliable gas-tight seal. In large cable connections relatively high mechanical stresses may occur in the sleeve during the assembly and installation as well as during use (for instance, due to earth movements). These stresses may cause leaks in the mechanical flange seal despite the provision of the clamping shells. Therefore in the current state of technology of cable connections in which the sleeve is closed mainly by the mechanical assembly of shells, a reliable gas-tight seal was not considered possible. Other provisions were made, for instance the introduction of water-repellent material into the wire connection carrying cavity of the sleeve as disclosed in U.S. Patent No. 3,836,694, to provide additional protection for the wire connections.

U.S. Patent No. 2,771,502 provides an electrical cable connection for multi-wire telecommunication cables, having a mechanical spliced closure or housing which is applied over joints in thermoplastics or lead sheathed cables which protects the joint and is gas-tight. More particularly, a plurality of insulated conductors have a jacket of insulating material wrapped therearound together with a thin mechanical sheath surrounding the insulating jacket and a sheath of thermoplastic enclosing the whole. Accordingly, the electrical cable connection shown in U.S. Patent No. 2,771,502 has a large number of mechanical parts which are involved in sealing just one end of the enclosure.

Disclosure of invention

The present invention provides an electrical cable connection for gas-pressurized, multi-wire telecommunication cables having gas-impermeable sheaths, the cable connection having an essentially tubular, electrically insulating sleeve, which while surrounding the wire connections extends from one cable sheath to another cable sheath and is sealed in the end portions to the cable sheaths in a gas-tight manner, the sleeve being composed of shells which can be clamped together by closure means and having longitudinal flanges along which the shells are sealed with respect to each other in a gas-tight manner by a mechanical flange seal, characterized in that casting moulds are partitioned off in the end portions of the sleeve by annular end walls located on the cable sheaths, that casting bodies restricted to the end portions seal the end portions to the respective cable sheath, that the gas-tight mechanical flange seal is connected in a gas-tight manner to the casting bodies by the closure means which comprises reinforcing elongate L-shaped members placed on the longitudinal flanges and tightening means acting upon the elongate L-shaped members to press the longitudinal flanges sealingly together, that bonding means is placed respectively between the casting moulds and the cable sheaths and shells and in that the tightening means comprise at least one high strength clamp of an essentially U-shaped cross-section, which clamp straddles the superimposed longitudinal flanges substantially along the entire length thereof and has in at least one of its two legs at least one tightening screw adapted to be advanced against an adjacent reinforcing elongate L-shaped member.

In the cable connection according to the invention no casting mass is required for sealing the flanges.

Thus the flanges can be designed smaller and less complex, a considerable saving of casting mass is obtained, and the assembly of the cable connection is greatly simplified and requires less care and skill. The cable connection according to the invention will remain gas tight even when subjected to the forces of assembly, installation and use because the mechanical flange seal is reinforced by the reinforcing ledges.

As compared to known cable connections which have purely mechanical seals such as disclosed in German Patent DE—B—21 57 718 and German disclosure letters DE—A—24 21 815, DE—A—26 15 314, the cable connection according to the invention is of much simpler construction. They can at the site of application be completely assembled manually from pre-fabricated parts which parts have been economically prepackaged in a construction kit. No specialized tools are necessary.

Brief description of the drawings
The invention will be subsequently described in more detail by means of embodiments in connection with the drawings. In the drawings:

Figure 1 is a perspective view partially in section of the cable connection according to the invention;

Figure 2 is an exploded view of the cable connection shown in Figure 1;

Figure 3 is a perspective view of an embodiment of an end wall for a cable connection according to the invention and

Figure 4 is a perspective exploded view of another embodiment of the end wall for a cable connection according to the invention.

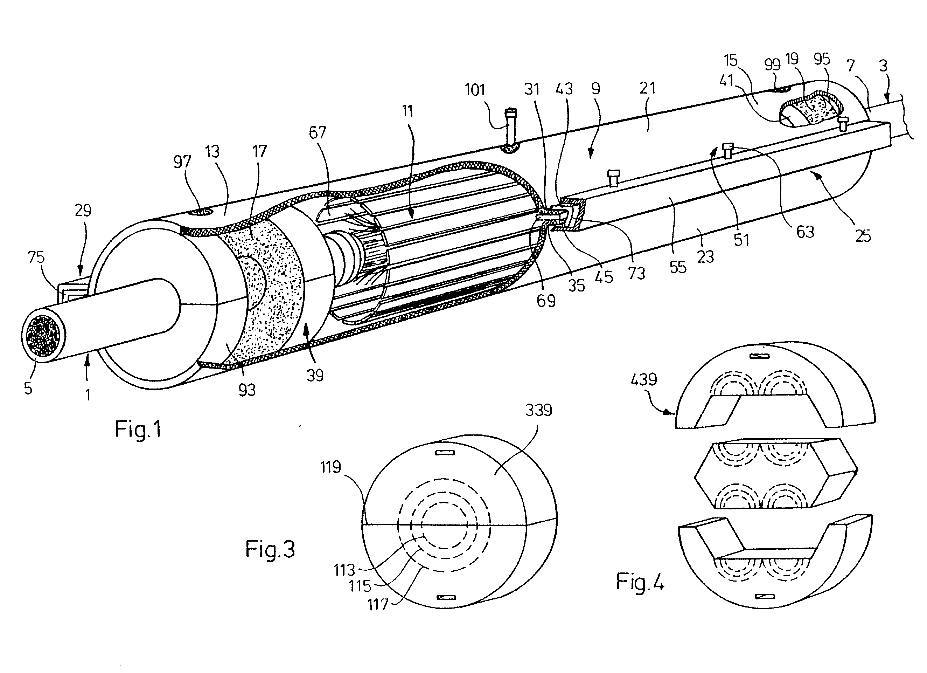

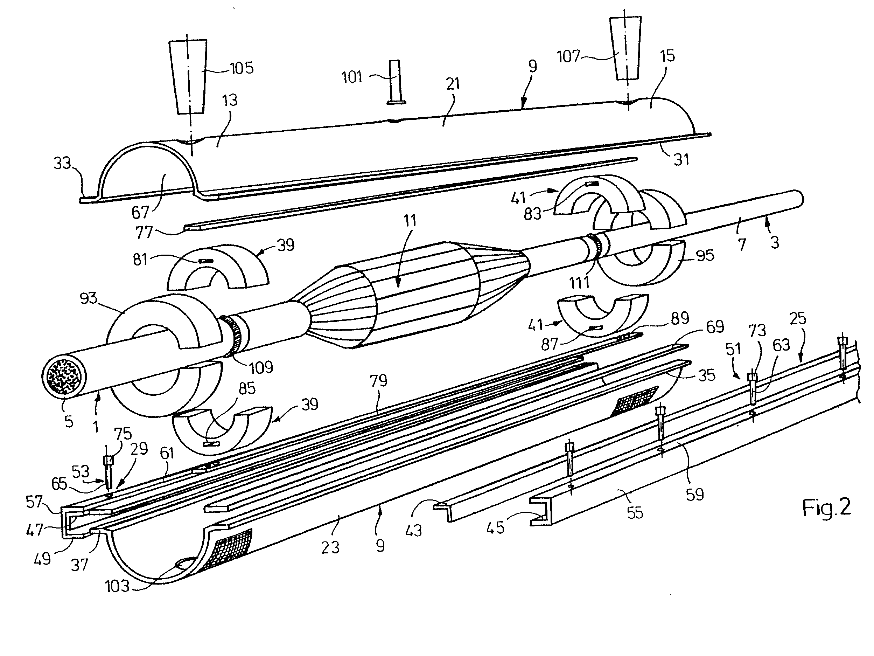

Detailed description
Figures 1 and 2 show an electrical cable connection for gas pressurizable multi-wire telecommunication cables 1 and 3 with gas-tight cable sheaths 5 respectively 7. The cable connection comprises an essentially tubular sleeve 9 of electrically insulating plastic material, for instance, polyvinylchloride. Sleeve 9 encloses wire connections 11, which have been prepared in the usual manner between the wires of both cables 1 and 3. Sleeve 9 extends from cable sheath 5 to cable sheath 7 and is in terminal portions 13 and 15 sealed to cable sheath 5 and 7, respectively, in a gas-tight manner by means of casting bodies 17 and 19, respectively. Sleeve 9 is formed by shells 21 and 23 which have an essentially semi-circular cross section. The shells can be clamped together by end closures 25 and 29 and longitudinal flanges 31 and 33 which mate with flanges 35 and 37, respectively, to seal the shells 21 and 23 to each other in a gas-tight manner.

In the end portions 13 and 15 of sleeve 9, casting moulds for the casting bodies 17 and 19 are partitioned off by annular end walls 39 and 41, respectively, arranged on cable sheath 5 and 7 so that the casting bodies 17 and 19 formed in the casting moulds are restricted to the end portions 13 and 15. The longitudinal flanges 31, 33, 35 and 37 are designed as a gas-tight mechanical flange seal which is connected in a gas-tight manner to the casting bodies 17 and 19. Closure means 25 with reinforcing ledges, for example reinforcing ledges 43 and 45 in closure means 25 and reinforcing ledges 47 and 49 in closure means 29. These reinforcing ledges are formed of a material to provide shape rigidity, for instance, a hard light metal or steel and dimensioned such that undesirable deformations of cable connections in the angle of the longitudinal flanges are prevented. Closure means 25 and 29 contain tightening means 51 and 53 for pressing the longitudinal flanges sealingly together. Since the longitudinal flanges extend beyond the end portions 13 and 15 of sleeve 9, during the casting of the casting bodies 17 and 19, the desired gas-tight connection in the end closures is formed by the casting bodies and the longitudinal closures are formed by the mechanical flange seals. Due to the strength of the reinforcing ledges and because of the kind and distribution of the tightening means, it can be insured in a very simple manner that a reliable gas tight and permanent seal will be obtained even with relatively long flanges.

The tightening means can be of a very simple design, particularly in the form of U-shaped strongly loadable clamps 55 and 57, which straddle the superimposed longitudinal flanges 31 and 35 and superimposed flanges 33 and 37, respectively. A series of tightening screws 63 and 65, are provided along one edge 59 and 61 of each clamp 55 and 57, respectively so that the tightening pressure applied to reinforcing ledges 43 and 47 can be uniformly distributed across the total length of the flanges. The described embodiment of the tightening means is very simple as to structure and assembly. Upon assembly, the tightening means will be tightened prior to the casting of the casting bodies 17 and 19; after the casting and hardening of casting bodies 17 and 19, the cable connection will be outwardly closed in a completely gas-tight manner but will contain an interior space 76 which forms a gas passage so that cables can be put under gas pressure as before.

In order to increase the strength of the reinforcing ledges and to make a greater tightening of the tightening means 51 and 53 possible, the clamps 55 and 57 are each designed as a stiff profile ledge, extending essentially along the entire length of the longitudinal flanges. In the illustrated embodiment the clamp is designed as a continuous profile ledge having a U-shaped cross section. This offers the advantages that the leg of the profile ledge which is located opposite of the tightening screws 63 or 65, can act itself as a reinforcing ledge 45 or 49. In order to simplify and to improve the sealing between the longitudinal flanges, a sealing-aid means is provided between the cooperating longitudinal flanges. These means may, for example, consist out of a glued-on sealing profile of an elastomeric material, a counter profile to which may be located at the opposing flange. In the figures, an effective embodiment of the sealing aid means is illustrated only at the longitudinal flanges 31 and 35, namely, in the form of an interposed sealing strip 69 of a rubber-elastic material. A corresponding sealing strip is provided also with the other pair of longitudinal flanges 33 and 37, but is not illustrated in the figures for reasons of clarity. In order to increase the specific pressing force of the sealing-aid means and thus make the sealing even safer, the sealing-aid means may be formed with a sealing profile which reduces the effective sealing surface, for instance in the form of a rib or the like extending along the entire length of the longitudinal flanges.

In order that the tightening means 51 respectively 53, cannot be excessively tightened and thus cause damage or at least cause deterioration of the sealing effect, appropriate limiting means are provided to limit the pressing together of the longitudinal flanges. These limiting means may be designed in various manners. In the illustrated embodiment, the limiting means are provided in a very simple manner in the form of the heads 73 and 75 of the tightening screws 63 and 65. The length of the screws is dimensioned such that the proper degree of compression of sealing strip 69 will be achieved upon complete advancement of the screws, that is, until the heads 73 respectively 75, abut at legs 59 and 61.

Often it is desirable, to relieve the cable connection from tensional loads in the longitudinal direction. This is possible in a simple and efficient way in that, as illustrated, the cast bodies are connected with each other in a manner providing tensile strength by two tension relief elements 77 and 79 which extend through apertures 81, 83 and 85, 87, respectively through end walls 39 and 41. These tension relief elements 77 and 79 at their end portions located in the area of the cast bodies 17, 19 provided with apertures or holes 89 so that the casting mass which enters into the holes will provide a strong anchoring of the tension relief elements in the casting bodies.

In the illustrated embodiments, the casting moulds determining the shape of casting bodies 17 and 19 are limited outwards by second annular end walls 93 and 95 which are placed on cable sheaths 5 respectively 7. Thereby, the sleeve does not have to have any particular shape at its end, it is sufficient that the sleeve is essentially cylindrical in the manner illustrated. Thereby, manufacturing and handling of sleeve 9 are greatly simplified.

The casting moulds can be filled with casting material through casting openings 97 and 99, provided in sleeve 9. A selectively closable valve 101 can be connected to interior space 67 so that the gas pressure in the interior space can be checked and/or gases can be vented from or introduced into the interior space. In the embodiment illustrated, the two shells 21 and 23 are identical in order to simplify storage and manufacture. Thus, shell 23 which is the lower shell in Figure 1, also includes casting openings of which the casting opening 103 can be seen in Figure 2. Upon assembly of the cable connection, the not-required casting openings are closed off by means of removable closure plugs for at least as long as the casting mass has not yet sufficiently hardened. In order to facilitate the pouring of the casting mass, pouring funnels 105, 107 can be placed at the casting openings.

If necessary, shells 21, 23 can be provided on the insides near end portions 13 and 15, with an adhesion-promoting surface, for example, in the case of PVC shells a roughening done by sand blasting. The same holds also for surface portions of cable sheaths 5 and 7 in the area of casting bodies 17 and 19. In Figure 2, sealing strips 109, 111 are placed on the cable sheaths for this purpose. These sealing strips consist of a material which has good adherence on one side to the cable sheaths and on the other side to the casting mass.

End walls 39, 41, 93 and 95 are each made in two pieces so that they can be conveniently placed onto the cables. The end walls are made of foamed plastic material, such as polyurethane foam material, so that they can be easily handled or changed at the site of application.

Figure 3 shows an embodiment of an end wall 339 which is provided with prefabricated punch-out lines 113, 115, 117, and is bisected in a central plane 119. By pushing out the central core along punch-out line 113, an opening for a relatively thin cable can be provided. By removing up to line 115 or even up to line 117, openings for correspondingly thicker cables can be easily provided.

Figure 4 shows another embodiment of an end wall 439 which is trisected and has a plurality of steps of punch-out lines (indicated by dotted lines in the figure) distributed such that, if required, openings for a plurality of cables can be created. This offers the advantage that several cables can be introduced into the same cable connection.

The assembly of the previously described cable connection can be done in a very simple manner at the site of application. Preferably, the parts of the cable connection are available in a prepackaged construction kit. Initially, wire connections 11 are prepared in the usual manner. If necessary, cable sheaths 5 and 7 are then provided or treated with adhesion-promoting auxiliary means in the area where casting bodies 17 and 19 will be formed. Thereafter, end walls 39, 41, 93 and 95 will be placed on the cable sheaths at the locations determined by the dimensions of sleeve 9 (these positions can be marked on the sleeves), and shells 21 and 23 are put together around the side walls with sealing strips 69 between the longitudinal flanges. Then, the reinforcing ledges 43 and 47 and clamps 55 and 57 (which also form the lower reinforcing ledges 45 and 49) are placed on the longitudinal flanges, and the tightening means 51 and 53 are tightened. Then, casting material is filled through pouring openings 97 and 99, while the casting openings in lower shell 23 are temporarily or permanently closed. After the hardening of the casting material the cable connection is finished. The cable connection offers the advantage that it provides a preliminary protection for the wire connections already after the clamping together of shells 21 and 23 but still in a non-cast condition which can be important, for example, in case of interruptions of the assembly work.

## Claims

1. An electrical cable connection for gas-pressurized, multi-wire telecommunication cables (1, 3) having gas-impermeable sheaths (5, 7), the cable connection having an essentially tubular, electrically insulating sleeve (9), which while surrounding the wire connections extends from the cable sheath (5) to cable sheath (7) and is sealed in the end portions (13, 15) to the cable sheath in a gas-tight manner, the sleeve being composed of shells (21, 23) which can be clamped together by closure means (25) and having longitudinal flanges (31, 35, 33 and 37) along which the shells (21, 23) are sealed with respect to each other in a gas-tight manner by a mechanical flange seal, characterized in that casting moulds are partitioned off in the end portions (13, 15) of the sleeve (9) by annular end walls (39, 41) located on the cable sheaths (5, 7), that casting bodies (17, 19) restricted to the end portions (13, 15) seal the said end portions (13, 15) to the cable sheath, that the gas-tight mechanical flange seal is connected in a gas-tight manner to the casting bodies (17, 19) by the closure means (25, 29) which comprises reinforcing elongate L-shaped members (43, 47) placed on the longitudinal flanges and tightening means (51, 53) acting upon the elongate L-shaped members to press the longitudinal flanges sealingly together, that bonding means are placed respectively between the casting moulds and the cable sheaths (5, 7) and shells (21, 23), and in that the tightening means (51, 53) comprise at least one high strength clamp (55, 57) of an essentially U-shaped cross-section, which clamp straddles the superimposed longitudinal flanges (31, 35, 33 and 37) substantially along the entire length thereof and has in at least one of its two legs at least one tightening screw (63, 65) adapted to be advanced against an adjacent reinforcing elongate L-shaped member (43, 47).

2. The cable connection in accordance with claim 1, characterized by sealing-aid means between the cooperating longitudinal flanges (31, 35, 33, 37).

3. The cable connection according to claim 2, characterized in that the sealing-aid means is a rubber elastic sealing strip (69).

4. The cable connection in accordance with any of the preceding claims, characterized by a limiting means for limiting the pressing together of the longitudinal flanges.

5. The cable connection in accordance with any of the preceding claims, characterized in that casting bodies (17, 19) are connected to one another in a manner providing tensile strength by means of a tension relief element (77, 79) which extends through apertures (81, 83, 85, 87) through the annular end walls (39, 41).

6. The cable connection in accordance with any of the preceding claims, characterized in that the casting moulds are outwardly bordered by second annular end walls (93, 95) placed on the cable sheaths (5, 7).

## Patentansprüche

1. Elektrische Kabelverbindung für gasdruckbeaufschlagte mehradrige Fernmeldekabel (1, 3) mit gasundurchlässigen Mänteln (5, 7), wobei die Kabelverbindung eine im wesentlichen rohrförmige, elektrisch isolierende Muffe (9) aufweist, die die Aderverbindungen umgibt und sich von Kabelmantel (5) zu Kabelmantel (7) erstreckt und in ihren Endteilen (13, 15) gasdicht mit den Kabelmänteln verbunden ist, wobei die Muffe aus Schalen (21, 23) besteht, die durch Verschlußmittel (25) zusammengespannt sind und Längsflansche (31, 35, 33 und 37) haben, an denen die Schalen durch eine mechanische Flanschdichtung gasdicht miteinander verbunden sind, dadurch gekennzeichnet, daß in den Endteilen (13, 15) der Muffe (9) durch auf den Kabelmänteln (5, 7) vorgesehene, ringförmige Stirnwände (39, 41) Gießformen abgeteilt sind, daß die genannten Endteile (13, 15) an den Kabelmänteln (25, 29) durch auf die Endteile (13, 15) beschränkte Gußteile (17, 19) abgedichtet sind, daß die gasdichte mechanische Dichtung mit den Gußteilen (17, 19) durch die Verschlußmittel (25, 29) gasdicht verbunden ist, die langgestreckte L-förmige Bewehrungsglieder (43, 47) umfassen, die auf den Längsflanschen angeordnet sind, und Spannmittel (51, 53), die auf die langgestreckten L-förmigen Glieder derart einwirken, daß die Längsflansche dicht gegeneinandergedrückt werden, daß zwischen den Gießformen und den Kabelmänteln (5, 7) einerseits und den Schalen (21, 23) andererseits Mittel zum stoffschlüssigen Verbinden vorgesehen sind und daß die Spannmittel (51, 53) mindestens ein im Querschnitt im wesentlichen U-förmiges, hochfestes Klemmstück (55, 57) umfassen, das die aufeinanderliegenden Längsflansche (31, 35, 33 und 37) im wesentlichen auf deren ganzer Länge umgreift und in mindestens einem seiner beiden Schenkel mit mindestens einer Spannschraube (64, 65) versehen ist, die gegen ein benachbartes langgestrecktes L-förmiges Bewehrungsglied (43, 47) vorschiebbar ist.

2. Kabelverbindung nach Anspruch 1, gekennzeichnet durch zwischen den miteinander zusammenwirkenden Längsflanschen (31, 35, 33, 37) vorgesehene Abdichthilfsmittel.

3. Kabelverbindung nach Anspruch 2, dadurch gekennzeichnet, daß das Abdichthilfsmittel ein gummielastischer Dichtstreifen (69) ist.

4. Kabelverbindung nach einem der vorhergehenden Ansprüche, gekennzeichnet durch eine Begrenzungseinrichtung zum Begrenzen des Gegeneinanderdrückens der Längsflansche.

5. Kabelverbindung nach einem der vorhergehenden Ansprüche, dadurch gekennzeichnet, daß Gußteile (17, 19) durch die ringförmigen Stirnwände (39, 41) in Ausnehmungen (81, 83, 85, 87) durchsetzende Zugentlastungselemente (77, 79) zugfest miteinander verbunden sind.

6. Kabelverbindung nach einem der vorhergehenden Ansprüche, dadurch gekennzeichnet, daß die Gießformen außen von an den Kabel mänteln (5, 7) vorgesehenen, zweiten ringförmigen Stirnwänden (93, 95) begrenzt sind.

## Revendications

1. Raccord de câble électrique pour des câbles de télécommunication multiples à pression gazeuse (1, 3), comportant des gaines imperméables aux gaz (5, 7), ce raccord de câble comportant un manchon essentiellement tubulaire (9), isolant du point de vue électrique et qui, tout en entourant les raccords de fil, s'étend depuis la gaine de câble (5) jusqu'à la gaine de câble (7) et est scellé, à l'endroit des parties terminales (13, 15), sur la gaine de câble d'une manière étanche aux gaz, ce manchon étant composé d'enveloppes (21, 23) qui peuvent être serrées ensemble grâce à des dispositifs de fermeture (25) et qui comportent des flasques longitudinaux (31, 35, 33 et 37) le long desquels ces enveloppes (21, 23) sont scellées l'une par rapport à l'autre d'une manière étanche aux gaz par un joint mécanique pour flasques, caractérisé en ce que des moules de coulée sont cloisonnés, à l'endroit des parties terminales (13, 15) du manchon (9) par des parois extrêmes annulaires (39, 41) localisées sur les gaines de câble (5, 7), en ce que des corps de coulée (17, 19) limités aux parties terminales (13, 15) scellent ces dernières sur la gaine de câble, en ce qu'un joint mécanique pour flasques, étanche aux gaz, est relié d'une manière étanche aux gaz aux corps de coulée (17, 19) par les dispositifs de fermeture (25, 29) qui comprennent de longs éléments de renforcement en forme de L (43, 47) disposés sur les flasques longitudinaux, et des dispositifs de serrage (51, 53) agissant sur les longs éléments en forme de L pour presser ensemble et de façon étanche les flasques longitudinaux, en ce que des moyens de liaison sont disposés entre les moules de coulée et respectivement les gaines de câble (5, 7) et les enveloppes (21, 23), et en ce que les dispositifs de serrage (51, 53) comprennent au moins une barre de serrage de haute résistance (55, 57) d'une section transversale essentiellement en forme de U, une telle barre de serrage chevauchant les flasques longitudinaux superposés (31, 35, 33 et 37) essentiellement suivant toute la longueur de ceux-ci et comportant dans au moins l'une de ses deux branches, au moins une vis de serrage (63, 65) destinée à s'avancer contre un long élément adjacent de renforcement en forme de L (43, 47).

2. Raccord de câble suivant la revendication 1, caractérisé en ce qu'il comprend des moyens d'aide au scellage, compris entre les flasques longitudinaux coopérants (31, 35, 33, 37).

3. Raccord de câble suivant la revendication 2, caractérisé en ce que les moyens d'aide au scellage sont constitués par un ruban de scellage élastique en caoutchouc (69).

4. Raccord de câble suivant l'une quelconque des revendications précédentes, caractérisé en ce qu'il comporte un moyen limiteur, destiné à limiter la pression des flasques longitudinaux l'un sur l'autre.

5. Raccord de câble suivant l'une quelconque des revendications précédentes, caractérisé en ce que les corps de coulée (17, 19) sont reliés entre eux de manière à assurer une résistance à la traction grâce à un élément soulageant les tensions (77, 79) qui s'étend à travers des ouvertures (81, 83, 85, 87) prévues à travers les parois extrêmes annulaires (39, 41).

6. Raccord de câble suivant l'une quelconque des revendications précédentes, caractérisé en ce que les moules de coulée sont délimités extérieurement par des secondes parois extrêmes annulaires (93, 95) disposées sur les gaines de câble (5, 7).

Fig.1

Fig.3

Fig.4

Fig.2